# EUROPEAN PATENT SPECIFICATION

(11) **EP 4 190 605 B1**
(45) Date of publication and mention of the grant of the patent: **06.03.2024**
(21) Application number: 21211546.3
(22) Date of filing: 01.12.2021
(51) Int. Cl.: B60G 99/00

(54) **PNEUMOMECHANICAL TROLLEY FOR A CONTAINER**
PNEUMOMECHANISCHER WAGEN FÜR EINEN BEHÄLTER
CHARIOT PNEUMOMÉCANIQUE POUR RÉCIPIENT

(43) Date of publication of application: 07.06.2023
(73) Proprietor: Klaipeda University, 92294 Klaipeda (LT)
(72) Inventor: Didziokas, Rimantas, Klaipeda (LT); Lukosius, Zydrunas, Klaipeda distr. (LT); Andziulis, Arunas, Klaipeda distr. (LT); Januteniene, Jolanta, Klaipeda (LT); Kurmis, Mindaugas, Klaipeda distr. (LT)
(74) Representative: Pakeniene, Ausra

(56) References cited:
- FR-A1- 2 238 872
- US-A1- 2005 161 916

## Description

### Technical field

Invention relates to freight carrying trolleys and in particular to container trolleys having shock absorption means for energy conversion.

### Background art

When a trolley for carrying a container is loaded, kinetic energy imparted onto structure of the trolley by a load being loaded is waisted and may result in damage to the trolley or the load itself.

Commonly to avoid damage of either the load carrying trolley or the load itself a trolley may be equipped with suspension means. One such example is disclosed in a US patent application No. 10/766,795 (publication No. US2005/0161916). The disclosed trolley has a frame, a cargo platform, a combination of a suspension system, wide wheelbase, and pneumatic. Main disadvantages of such system are that it is unstable, has low tolerance for overweight load, brakes and any other further components which has to be operated when the trolley is operated must be operated by input of further forces by an operator of the trolley.

FR2238872 discloses a support comprising a base frame, a platform for direct interaction with a load, pneumatic shock absorbers, air valves, and a compressed air tank.

It is known that kinetic energy generated by a transported load can be converted into potential energy by storing it in a form of a pressurized gas. An example of the prior art is disclosed in a publication Compressed Air Generation Using Vehicle Suspension System, S.Shelke, P.Gore, G.Jadhav , A.Doiphode, S.Tekwade, 2018 IJSRSET / Volume 4 / Issue 7 / Print ISSN: 2395-1990 / Online ISSN : 2394-4099*.* The compressed air is produced using suspension of a vehicle during loading of the suspension elements. The compressed air is accumulated in a compressed air storage tank and is used to operate the vehicle. The compressed air is used for running the vehicle and for air conditioning purposes. The system comprises an air tank, pneumatic actuator, and a braking system. Main disadvantages of the system are that kinetic energy may only be accumulated on long distances using varying loading by the same or similar load, accumulated potential energy can only be used on the same vehicle and the pressurized air accumulation and distribution does not have safeguards against unexpected pressure drops in the pressurized air accumulation and distribution system.

The present invention is dedicated to overcoming of the above shortcomings and for producing further advantages over prior art.

### Brief description of the invention

The object of the invention is a pneumomechanical container trolley converting kinetic energy of load impact to potential energy of compressed air for operation of the container trolley or further pneumatic devices with increased security against unexpected pressure drop in the compressed air accumulation and distribution system and preventing damage to the trolley and/or the load. The invention is realized via arrangement of shock absorbers for pressurizing air, primary and secondary compressed air tanks for steady supply of pressurized air for operation of pneumatic devices of the container trolley. The invention allows transferring kinetic energy to potential energy during controlled loading of the container trolley. Safeguards' arrangement of the container trolley for control of flow of the compressed air allows continuous operation of the container trolley even if pressure of pressurized air drops to unallowable threshold leading to failure of a pneumatic devise or operation of the container trolley itself. When a load is loaded onto a platform of the container trolley at a constant speed and kinetic energy from impact is transformed into high pressure air potential energy, pressurized air is supplied to at least one primary compressed air accumulation tank and at least one secondary compressed air accumulation tank from which the compressed air is supplied to pneumatic nodes of the trolley. The amount of absorbed kinetic energy is directly proportional to mass of the load.

The compressed air from the ta least one secondary compressed air accumulation tank may be used for emergency supply of compressed air to primary compressed air accumulation tanks or pneumatic devices, or can be used remotely from the container trolley from the secondary compressed air accumulation tank by removing the secondary compressed air accumulation tank from the trolley and swapping it with an empty secondary compressed air tank.

### Brief description of drawings

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

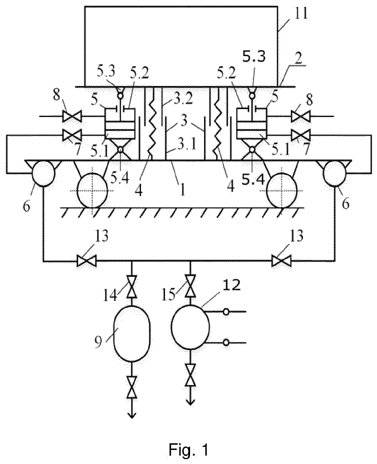

Fig.1. shows a schematic representation of an example of pneumomechanical container trolley according to the invention.

Preferred embodiments of the invention will be described herein below with reference to the drawings. Each figure contains the same numbering for the same or equivalent element.

### Detailed description of the invention

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

A pneumomechanical container trolley according to embodiment of the invention comprises a base frame (1) comprising means of locomotion or means for attachment to apparatus of locomotion, a platform (2) for direct interaction with a load (11), guides (3) for guiding motion of the platform (2) relatively to the base frame (1) and of resilient elements (4), resilient elements (4) for pushing the platform (2) outwards from the base frame (1) and for expanding pneumatic shock absorbers (5), pneumatic shock absorbers (5) for pressurizing air and supplying such air for further application. The pneumomechanical container trolley also comprises air valves (7) for managing compressed air flow from the shock absorbers (5) to primary compressed air tanks (6), or a single primary compressed air tank (6), and air valves (8) for managing compressed air release into surroundings and for managing ambient air intake into the shock absorbers (5). The pneumomechanical container trolley comprises primary compressed air tanks (6) for primary accumulation of compressed air from each associated shock absorber (5) for direct supply of pressurized air to pneumatic devices (12) of the trolley via valves (13, 15) and for supply of compressed air to the secondary compressed air tank (9) via valves (13, 14) for transfer of surplus air pressure. The pneumomechanical container trolley comprises at least one replaceable secondary compressed air tank (9) fluidly connected with all primary compressed air tanks (6) for secondary accumulation of compressed air. Each primary compressed air accumulation tanks (6) are fluidly connected with one replaceable secondary compressed air tank (9) or individual replaceable secondary compressed air tanks (9). Each secondary compressed air tank (9) is configured for accumulating emergency compressed air and for accumulating compressed air for off-trolley use. Each compressed air tank (6, 9) may be provided with an emergency pressure relief valve.

The secondary compressed air tank (9) is filled with pressurized air after the primary compressed air tanks (6) reaches full pressure. After the secondary compressed air tank (9) is filled with predetermined volume of pressurized air the full secondary tank (9) may be replaced with an empty secondary tank (9). All primary compressed air tanks (6) are connected with the secondary compressed air tank (9) so that pressurized air from the secondary compressed air tank (9) would be allowed to replenish the primary compressed air tanks (6) for operation of pneumatic devices to which compressed air is supplied from the first compressed air tanks (6).

The invention comprises at least one shock absorber (5), at least one primary compressed air tank (6), at least one secondary compressed air tank (9) and at least one pneumatic device (12) interconnected as described above.

The platform (2) is coupled to the base frame (1) via guides (3), resilient elements (4) and pneumatic shock absorbers (5). Each guide (3) comprises first part (3.1) being immovably fixed at one end to the base frame (1) leaving the other end free, and a second part (3.2) immovably fixed at one end to the platform (2) leaving the other end free. The first part (3.1) and the second part (3.2) preferably move relatively to each other where one part of the first (3.1) and the second (3.2) parts moves inside another part of the first (3.1) and the second parts. Each resilient member (4) is at least partially enclosed by a respective guide (3).

The guides (3) are elongated elements positioned preferably at each corner and/or side of the base frame (1) or in combination of corner position and side position so that motion of the platform (2) is restricted to linear motion towards the base frame (1) and outwards the base frame (1) along the guides (3). The resilient elements (4) are disposed between the base frame (1) and platform (2) preferably near each of the guides (3) or near more than one guide (3) and most preferably inside of the guides (3). One end of each of the resilient element (4) is fixed to the base frame (1) and another end of the resilient element (4) is fixed to the platform (2). The resilient elements (4) can be load springs or other elastically deformable elements. The resilient elements (4) are such that resist force exerted by unloaded platform (2) on to the resilient elements (4) and keep the platform (2) at its furtherst position from the base frame (1) without.

The pneumatic shock absorbers (5) are disposed between the base frame (1) and platform (2) preferably near each of the guides (3) or near more than one guide (3). Each of the pneumatic shock absorbers (5) comprises first end (5.1) being attached to the base frame (1) and a second end (5.2) being attached to the platform (2).

Each of primary compressed air tanks (6) and secondary compressed air tank (9) prior to loading of a load (11) onto the platform (2) has such inner pressure which does not impede upward motion of the platform (2), forced by resilient elements (4) to its initial position being furthers from the base frame (1). Ambient air is being supplied to the expanding shock absorbers (5) via ambient air intake valves (8). The air is forced into the shock absorbers (5) by expanding the shock absorbers. The shock absorbers (5) are expanded by pulling of shock absorbers (5) at their ends (5.2) attached to the platform (2) at the time when the platform (2) is being pushed to initial position being furthest from the base frame (1). The shock absorbers (5) may be similar to bellows employed in contemporary pneumatic suspensions. The valves (7) controlling pressurized air flow from the shock absorbers (5) to primary compressed air tanks (6) are closed. When a load (11) is placed onto the platform (2) it forces the platform (2) to move towards the base frame (1) by overcoming resistance forces exerted to the platform (2) by resilient elements (4). All ambient intake valves (8) are closed and valves (7) controlling pressurized air one way flow from the shock absorbers (5) to primary compressed air tanks (6) are opened. When the platform (2) is moved from its initial position towards the base frame (1) the kinetic energy imparted by the load (11) to the trolley is essentially converted to compressed air potential energy by pushing air from the shock absorbers (5) via piping and air control valves (7) to the compressed air tanks (6).

When the platform (2) is at any position lower than the initial position being at the furthest from the base frame (1) the platform (2) is locked at that lower position by closing the air control valves (7) between the shock absorbers (5) and the compressed air accumulation tanks (6). At the lower than initial position the shock absorbers (5) are not allowed to move backwards by creating negative pressure in the shock absorbers (5) which does not allow backwards motion of the platform (2).

After the load (11) is removed from the platform (2), the air control valves (7) between the shock absorbers (5) and the compressed air accumulation tanks (6) are kept closed and air valves (8) for ambient air intake into the shock absorbers (5) are opened to allow the resilient elements (4) to expand the shock absorbers (5) to their maximum volume and fill them with low pressure air by forcing the platform (2) to return to its position furthest from the base platform (1). The resilient elements (4) are loaded only to again counteract weight of the platform (2) and resistance of expansion of the shock absorbers (5).

The platform (2) preferably is very light so that restoring force of the resilient elements (4) would be as small as possible. The load (11) preferably acts on the shock absorbers (5) as if the resilient elements (4) would not counteract motion of the load (11) entirely or would counteract negligibly.

Such configuration allows maximum conversion of load (11) imparted kinetic energy into compressed air potential energy as the resilient elements (4) are exerting resisting force only to the motion of the platform (2) towards the base frame (1) only to keep the platform at its highest position from the base frame (1) when not loaded and to expand the shock absorbers (5). The platform (2) is relatively easily moved towards the base platform (1) when loaded allowing maximum energy conversion.

The primary compressed air accumulation tanks (6) are filled by compressed air from respective shock absorbers (5), where each one shock absorber (5) is fluidly connected to associated primary compressed air accumulation tank (6). All shock absorbers (5) may be connected to one primary compressed air accumulation tank (6).

When the primary compressed air tanks (6) reach their full capacity, the air is allowed to escape to the environment from of the shock absorbers (5) via pressure relief valves (8) in a controlled manner by controlling amount of released airflow. Also, the surplus pressurized air may be allowed to fill the secondary compressed air accumulation tank (9).

Each one of the primary compressed air tanks (6) is connected via valves (13, 15) and piping to a single pneumatic device (12). Each pneumatic device (12) may also be fluidly connected to one primary compressed air tank (6) and the secondary compressed air tank (9). Such devices may be brakes, turbogenerators, end-effectors or any other devices that can be powered by compressed air.

In normal conditions of operation when the primary compressed air tanks (6) contain a ready-to-use sufficient amount of pressurized air for operation of associated pneumatic devices (12) the pneumatic devices (12) are powered supplying necessary amount of pressurized air directly from primary compressed air tank (6).

In conditions when any one of the primary compressed air tanks (6) does not hold a necessary and predetermined amount of pressurized air to properly and safely power associated pneumatic devices, the deficient amount of pressurized air is supplied from secondary compressed air tank (9) or tanks (9) to pneumatic devices (12) via valves (14, 15) which cannot be powered from an associated primary compressed air tank (6), or supplied to pneumatic devices (12) via primary associated compressed air tanks (6).

The container trolley is supplied with multiple pressure sensors for detecting pressure drop in critical locations of the pressurized air accumulation and supply system of the trolley. Not shown in drawings, but the pressure sensors are disposed to measure pressure of air flowing from each shock absorber (5), pressure of air flowing from each primary compressed air tanks (6), pressure of air from each secondary compressed air tanks (9), and pressure at pneumatic devices (12). According to measurements of each of the sensors the pressurized air is supplied to pneumatic devices (12) in a method as described below in a controlled manned. If for example at any sensor of the pressurized air accumulation and supply system an unallowable pressure drop is detected the pressure supply to a pneumatic device (12) is transferred from the secondary compressed air supply tank (9) or tanks (9) via the primary compressed air tank (6) or tanks (6) or directly to the pneumatic device (12) via valves (14, 15) until normal functioning of the pressurized air accumulation and supply system is restored increasing safety of operation of pneumatic devices (12) and container trolley itself.

All valves are controlled electrically using a controller.

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

## Claims

1. Pneumomechanical container trolley comprising a base frame, a platform for direct interaction with a load, pneumatic shock absorbers, air valves, and a compressed air tank **characterized in that** the container trolley further comprises guides (3) for guiding motion of the platform (2) upwards and downwards relatively to the base frame (1) and for guiding motion of resilient elements (4), where the resilient elements (4) are configured for pushing the platform (2) outwards from the base frame (2) and expanding the shock absorbers (5),
the container trolley comprises at least one primary compressed air tank (6), at least one secondary compressed air tank (9), at least one pneumatic device (12),
where each shock absorber (5) is fluidly connected with the primary compressed air tank (6) and the secondary compressed air tank (9) for compressed air supply to the primary compressed air supply tank (6) and to the secondary compressed air supply tank (9) via the primary compressed air supply tank (6),
where each pneumatic device (12) is fluidly connected with the primary compressed air tank (6) and the secondary compressed air tank (9) for compressed air supply.

2. Pneumomechanical container trolley according to claim 1, where each pneumatic device (12) is fluidly connected directly with the primary compressed air tank (6) and directly with the secondary compressed air tank (9) for compressed air supply.

3. Pneumomechanical container trolley according to any one of the claims 1-2, where the secondary compressed air tank (9) is a replaceable compressed air tank (9).

## Patentansprüche

1. Pneumomechanischer Behälterwagen, umfassend ein Grundgestell, eine Plattform für eine direkte Interaktion mit einer Last, pneumatische Stoßdämpfer, Luftventile und einen Drucklufttank, **dadurch gekennzeichnet, dass** der Behälterwagen ferner Führungen (3) zum Führen einer Bewegung der Plattform (2) nach oben und nach unten relativ zu dem Grundgestell (1) und zum Führen einer Bewegung von biegsamen Elementen (4) umfasst, wobei die biegsamen Elemente (4) so ausgestaltet sind, dass sie die Plattform (2) von dem Grundgestell (2) nach außen schieben und die Stoßdämpfer (5) dekomprimieren,
der Behälterwagen zumindest einen primären Drucklufttank (6), zumindest einen sekundären Drucklufttank (9), zumindest eine pneumatische Vorrichtung (12) umfasst,
wobei jeder Stoßdämpfer (5) mit dem primären Drucklufttank (6) und dem sekundären Drucklufttank (9) in Fluidverbindung steht, um den primären Druckluftversorgungstank (6) und den sekundären Druckluftversorgungstank (9) über den primären Druckluftversorgungstank (6) mit Druckluft zu versorgen,
wobei jede pneumatische Vorrichtung (12) für eine Druckluftversorgung mit dem primären Drucklufttank (6) und dem sekundären Drucklufttank (9) in Fluidverbindung steht.

2. Pneumomechanischer Wagenbehälter nach Anspruch 1, wobei jede pneumatische Vorrichtung (12) für eine Druckluftversorgung direkt mit dem primären Drucklufttank (6) und direkt mit dem sekundären Drucklufttank (9) in Fluidverbindung steht.

3. Pneumomechanischer Wagenbehälter nach einem der Ansprüche 1 bis 2, wobei der sekundäre Drucklufttank (9) ein austauschbarer Drucklufttank (9) ist.

## Revendications

1. Chariot pneumomécanique pour récipient comprenant un cadre de base, une plate-forme pour une interaction directe avec une charge, des amortisseurs pneumatiques, des vannes d'air et un réservoir d'air comprimé, **caractérisé en ce que** le chariot pour récipient comprend en outre des guides (3) pour guider le mouvement de la plate-forme (2) vers le haut et vers le bas par rapport au cadre de base (1) et pour guider le mouvement d'éléments élastiques (4), où les éléments élastiques (4) sont configurés pour pousser la plate-forme (2) vers l'extérieur du cadre de base (2) et dilater les amortisseurs (5),
le chariot pour récipient comprend au moins un réservoir d'air comprimé primaire (6), au moins un réservoir d'air comprimé secondaire (9), au moins un dispositif pneumatique (12),
où chaque amortisseur (5) est en communication fluidique avec le réservoir d'air comprimé primaire (6) et le réservoir d'air comprimé secondaire (9) pour l'alimentation en air comprimé du réservoir d'alimentation en air comprimé primaire (6) et du réservoir d'alimentation en air comprimé secondaire (9) via le réservoir d'alimentation en air comprimé primaire (6),
où chaque dispositif pneumatique (12) est en communication fluidique avec le réservoir d'air comprimé primaire (6) et le réservoir d'air comprimé secondaire (9) pour l'alimentation en air comprimé.

2. Chariot pneumomécanique pour récipient selon la revendication 1, dans lequel chaque dispositif pneumatique (12) est en communication fluidique directement avec le réservoir d'air comprimé primaire (6) et directement avec le réservoir d'air comprimé secondaire (9) pour l'alimentation en air comprimé.

3. Chariot pneumomécanique pour récipient selon l'une quelconque des revendications 1 et 2, dans lequel le réservoir d'air comprimé secondaire (9) est un réservoir d'air comprimé remplaçable (9).
